# EUROPÄISCHE PATENTANMELDUNG

(11) **EP 2 955 392 A1**
(43) Veröffentlichungstag der Anmeldung: **16.12.2015**
(21) Anmeldenummer: 15170947.4
(22) Anmeldetag: 08.06.2015
(51) Int. Cl.: F15B 15/28, G01D 11/30

(54) **SENSORAUFNAHME FÜR EINEN HYDRAULISCHEN ZYLINDER**

(30) Priorität: 10.06.2014 DE 102014210977
(71) Anmelder: Schaeffler Technologies AG & Co. KG, 91074 Herzogenaurach (DE)
(72) Erfinder: Dubas, Richard, 45170 Neuville aux Bois (FR); Balah, Kevin, 45410 Artenay (FR)

(57) **Zusammenfassung**

Die vorliegende Erfindung betrifft eine Sensoraufnahme (10) zum Fixieren und elektrischen Kontaktieren eines Sensors (30) an einem Hydraulikzylinder, insbesondere an einem Geberzylinder, wobei die Sensoraufnahme einen Grundkörper (12) mit einer Abdeckung (14) zum Fixieren des Sensors und mit einer Aufnahme (16) zum Aufnehmen eines elektrischen Anschlusses umfasst, wobei die Sensoraufnahme weiterhin eine an dem Grundkörper fixierte Kontaktierungseinheit (18) aufweist, die eine Leitungsstruktur mit einer Mehrzahl an Leitungssträngen (20) umfasst, wobei die Leitungsstränge jeweils endseitig eine Kontaktierung (22) zum elektrischen Kontaktieren des Sensors und eine Kontaktierung (24) zum elektrischen Kontaktieren des elektrischen Anschlusses umfassen, wobei ferner zumindest ein Bereich der Leitungsstruktur zwischen den Kontaktierungen zum elektrischen Kontaktieren des Sensors und den Kontaktierungen zum elektrischen Kontaktieren des elektrischen Anschlusses mit einer an der Leitungsstruktur angeordneten Fixierung (26) versehen ist, wobei die Fixierung die Leitungsstränge miteinander fixiert. Eine derartige Sensoraufnahme ist besonders einfach und kostengünstig herstellbar.

## Beschreibung

Die vorliegende Erfindung betrifft eine Sensoraufnahme zum Fixieren und elektrischen Kontaktieren eines Sensors für einen Hydraulikzylinder, insbesondere für einen Geberzylinder, die eine verbesserte Herstellbarkeit ermöglicht. Die vorliegende Erfindung betrifft ferner ein Verfahren zum Herstellen einer Sensoraufnahme zum Fixieren und zum elektrischen Kontaktieren eines Sensors für einen hydraulischen Zylinder.

Es sind Geberzylinder, beispielsweise für eine hydraulisch betätigte Kupplung eines Fahrzeugs, mit einer in einem Gehäuse angeordneten Führungshülse bekannt, die einen Abschnitt eines Zylinders bildet, in welchem ein über eine Kolbenstange mit einem manuell zu betätigenden Pedal oder mit einem elektromagnetisch oder hydraulisch betätigten Aktor verbundener Kolben axial verschiebbar geführt ist. Dabei kann es beispielsweise für ein Steuern des Geberzylinders notwendig sein, die Position des Zylinders in der Führungshülse zu bestimmen.

Hierzu ist es bekannt, dass der Geberzylinder einen Weg- oder Positionssensor aufweist, und ferner an dem verschiebbar geführten Kolben ein auch als Target bezeichnetes von dem Sensor detektierbares Element angeordnet ist. Auf diese Weise lässt sich einfach die Position des Targets und dadurch die Stellung des Kolbens in dem Zylinder ermitteln.

Dabei ist es bekannt, dass an dem hydraulischen Zylinder, beziehungsweise an dem Zylindergehäuse, eine Sensoraufnahme angeordnet ist, die den Sensor an dem Gehäuse fixieren und gleichzeitig elektrisch kontaktieren kann. Oftmals ist jedoch insbesondere die Ausbildung der elektrischen Kontaktierung des Sensors durch das Einbringen von Leitungsstrukturen aufwändig.

Hiervon ausgehend ist es die Aufgabe der vorliegenden Erfindung, die aus dem Stand der Technik bekannten Nachteile zumindest teilweise zu überwinden. Es ist insbesondere die Aufgabe der vorliegenden Erfindung, eine Sensoraufnahme und ein Verfahren zum Herstellen einer Sensoraufnahme zu schaffen, die beziehungsweise das die Herstellung der Sensoraufnahme vereinfacht.

Die Lösung der Aufgabe erfolgt erfindungsgemäß durch eine Sensoraufnahme mit den Merkmalen des Anspruchs 1. Die Lösung der Aufgabe erfolgt erfindungsgemäß ferner durch ein Verfahren zum Herstellen einer Sensoraufnahme mit den Merkmalen des Anspruchs 7. Die Lösung der Aufgabe erfolgt erfindungsgemäß weiterhin durch ein hydraulisches System mit den Merkmalen des Anspruchs 9. Bevorzugte Ausgestaltungen der Erfindung sind in den Unteransprüchen angegeben, wobei weitere in der Beschreibung oder den Figuren beschrieben Merkmale einzeln oder in einer beliebigen Kombination ein Gegenstand der Erfindung sein können, wenn sich aus dem Kontext nicht eindeutig das Gegenteil ergibt.

Die erfindungsgemäße Sensoraufnahme dient insbesondere zum Fixieren und elektrischen Kontaktieren eines Sensors an einem Hydraulikzylinder, insbesondere an einem Geberzylinder, etwa eines hydraulischen Kupplungssystems. Die Sensoraufnahme umfasst einen Grundkörper mit einer Abdeckung zum Fixieren des Sensors und mit einer Aufnahme zum Aufnehmen eines elektrischen Anschlusses. Dabei ist es ferner vorgesehen, dass die Sensoraufnahme weiterhin eine an dem Grundkörper fixierte Kontaktierungseinheit aufweist, die eine Leitungsstruktur mit einer Mehrzahl an Leitungssträngen umfasst, wobei die Leitungsstränge jeweils endseitig eine Kontaktierung zum elektrischen Kontaktieren des Sensors und eine Kontaktierung zum elektrischen Kontaktieren des elektrischen Anschlusses umfassen, wobei ferner zumindest ein Bereich der Leitungsstruktur zwischen den Kontaktierungen zum elektrischen Kontaktieren des Sensors und den Kontaktierungen zum elektrischen Kontaktieren des elektrischen Anschlusses mit einer an der Leitungsstruktur angeordneten Fixierung versehen ist, wobei die Fixierung die Leitungsstränge miteinander fixiert.

Eine derartige Sensoraufnahme weist mit Bezug auf die aus dem Stand der Technik bekannten Lösungen signifikante Vorteile auf, insbesondere bezüglich der Herstellung.

Hierzu dient die Sensoraufnahme insbesondere dem Fixieren sowie dem elektrischen Kontaktieren eines an einem hydraulischen Zylinder angeordneten Sensors. Ein derartiger Sensor kann insbesondere ein Wegsensor beziehungsweise ein Positionssensor sein und die Position eines in dem Zylinder angeordneten Kolbens erfassen. Dies kann insbesondere für eine Steuerung des Kolbens in dem Zylinder und somit, für den beispielhaften Fall der Verwendung für einen Geberzylinder in einem hydraulischen Kupplungssystem, einer besonders komfortablen Ansteuerung einer Kupplung dienen. Ein derartiger Sensor ist aus dem Stand der Technik grundsätzlich bekannt und kann beispielsweise eine PCB Spule umfassen, welche beispielsweise induktiv die Position eines so genannten Targets erfassen kann, welches an einem Kolben fixiert ist. Der Sensor kann dabei beispielsweise an einem Gehäuse des hydraulischen Zylinders angeordnet sein.

Für eine Fixierung beziehungsweise elektrische Kontaktierung des Sensors umfasst die Sensoraufnahme einen Grundkörper mit einer Abdeckung zum Fixieren des Sensors und mit einer Aufnahme zum Aufnehmen eines elektrischen Anschlusses. Die Abdeckung kann dabei beispielsweise als Gehäusebauteil ausgebildet sein, welches in einem montierten Zustand den Sensor abdeckt, beispielsweise aufnimmt, und dabei etwa an dem Gehäuse des hydraulischen Zylinders fixierbei ist. Beispielsweise kann der Grundkörper beziehungsweise die Abdeckung an dem Gehäuse durch einen Schweißprozess fixiert sein. Weiterhin ist eine Aufnahme zum Aufnehmen und dabei insbesondere zum Anschließen eines elektrischen Anschlusses vorgesehen, an welchem der elektrische Anschluss fixiert werden kann. Beispielsweise kann die Aufnahme als Hülse ausgestaltet sein, so dass ein elektrischer Strecker in dieser fixiert werden kann. Dies kann beispielsweise notwendig sein, um die von den Sensor gelieferten Daten an einer Steuereinheit weiterzuleiten, um so den Kolben geeigneter Weise ansteuern zu können.

Die Sensoraufnahme weist weiterhin eine an dem Grundkörper fixierte Kontaktierungseinheit auf, die eine Leitungsstruktur mit einer Mehrzahl an Leitungssträngen umfasst, wobei die Leitungsstränge jeweils endseitig eine Kontaktierung zum elektrischen Kontaktieren des Sensors und eine Kontaktierung zum elektrischen Kontaktieren des elektrischen Anschlusses umfassen. Somit kann durch die Leitungsstruktur eine elektrische Verbindung hergestellt werden zwischen dem Sensor und dem elektrischen Anschluss, wie beispielsweise dem Stecker, und damit beispielsweise mit der Steuereinheit, wenn der elektrische Anschluss, wie etwa der Stecker, in beziehungsweise an der Aufnahme angeordnet ist. Die Leitungsstruktur beziehungsweise die jeweiligen Leitungsstränge weist beziehungsweise weisen dabei insbesondere beidseitig und dabei insbesondere an den jeweils endgegengesetzten Enden entsprechende elektrische Kontaktierungen auf, die insbesondere jeweils als Kontaktstifte ausgestaltet sein können, so dass die Kontaktstifte jeweils in an sich bekannter Weise durch jeweils einen Leitungsstrang miteinander verbunden sind. Die Anzahl der elektrischen Anschlüsse beziehungsweise insbesondere der Kontaktstifte und damit ebenfalls der Leitungsstränge kann dabei grundsätzlich frei wählbar sein und insbesondere angepasst sein an den zu verwendenden Sensor und den anzuwendenden elektrischen Anschluss, wie insbesondere den Stecker.

Dabei ist es ferner vorgesehen, dass zumindest ein Bereich der Leitungsstruktur zwischen den Kontaktierungen zum elektrischen Kontaktieren des Sensors und den Kontaktierungen zum elektrischen Kontaktieren des elektrischen Anschlusses mit einer an der Leitungsstruktur angeordneten Fixierung versehen ist, wobei die Fixierung die Leitungsstränge miteinander fixiert.

Insbesondere durch die vorbeschriebene Ausgestaltung kann die Herstellung der Sensoraufnahme deutlich vereinfacht werden, da nunmehr nicht mehr, wie dies aus dem Stand der Technik bekannt ist, die einzelnen Leitungsstränge jeweils einzeln eingefügt und beispielsweise gebogen werden müssen, um so eine elektrische Kontaktierung zwischen Sensor und einen elektrischen Anschluss herzustellen. Die Kontaktierungseinheit kann vielmehr auf einfache Weise als stabile und eigenständige Unterbaugruppe ausgestaltet werden und so als eigenständiges Bauteil an dem Grundkörper der Sensoraufnahme fixiert werden, was mit nur einem einzigen Arbeitsschritt möglich ist.

Darüber hinaus kann auf diese Weise eine sehr flexible Herstellung der Kontaktierungseinheit beziehungsweise der Sensoraufnahme möglich sein, da die Leitungsstruktur beziehungsweise die Unterbaugruppe bereits bei der Herstellung auf einfache Weise an das gewünschte Anwendungsgebiet anpassbar ist. Somit kann bei der Herstellung der Sensoraufnahme auf einfache Weise die gewünschte Kontaktierungseinheit beziehungsweise Leitungsstruktur verwendet und so die Sensoraufnahme an das gewünschte Anwendungsgebiet angepasst werden.

Dies kann insbesondere von Vorteil sein, da oftmals aufgrund der Raumverhältnisse der elektrische Anschluss nicht optimal zu dem Sensor ausgerichtet werden kann, was die Anordnung der Leitungsstruktur besonders aufwändig und damit kostenintensiv machen kann. Diese Nachteile können durch die vorbeschriebene Ausgestaltung problemlos überwunden werden.

Zusammenfassend kann die vorbeschriebene Sensoraufnahme eine besonders einfache und kostengünstige Herstellbarkeit bei guten Messergebnissen des Sensors erlauben.

In einer bevorzugten Ausgestaltung der Sensoraufnahme kann die Fixierung als eine insbesondere aus einem Kunststoff ausgebildete Umhüllung ausgestaltet sein, in die die Mehrzahl an Leitungssträngen eingebettet ist.

Ein Einbetten der Leitungsstränge der Leitungsstruktur in eine Umhüllung soll dabei im Sinne der vorliegenden Erfindung insbesondere bedeuten, dass die Umhüllung die Leitungsstränge beziehungsweise den entsprechenden Bereich der Leitungsstruktur vollständig aufnimmt, beziehungsweise der Bereich der Leitungsstruktur vollständig von der Umhüllung umgeben ist. Dabei ist die Umhüllung als Fixierung an der Leitungsstruktur fixiert, so dass die Leitungsstruktur beziehungsweise die Leitungsstränge zusammen mit der Umhüllung die stabile vorbeschriebene Unterbaugruppe ausbildet. Durch eine Umhüllung kann dabei eine besonders stabile Fixierung ausgebildet werden. Darüber hinaus kann durch die Umhüllung ferner der weitere Vorteil erzielt werden, dass insbesondere bei der Verwendung einer PCB Spule als Sensor die Leitungsstruktur keinen oder nur einen reduzierten Einfluss auf die Messgenauigkeit hat. Denn durch das Fließen des Stroms durch die Leitungsstruktur kann die Messgenauigkeit der PCB-Spule negative beeinflusst werden. Insbesondere durch eine geeignete Wahl des Materials der Umhüllung kann dieser Nachteil jedoch verhindert oder zumindest signifikant reduziert werden.

Dabei kann es bevorzugt sein, wenn die Umhüllung aus einem Kunststoff ausgebildet ist, etwa aus einem Kunststoff besteht. Beispielsweise kann die Umhüllung aus Polyoxymethylen (POM) ausgestaltet sein, wobei das Material nicht auf den vorbeschriebenen Kunststoff beschränkt ist. Insbesondere in dieser Ausgestaltung kann es realisierbar sein, dass eine einfache Herstellbarkeit kombiniert wird mit der Reduzierung des Einflusses des durch die Leitungsstruktur fließenden Stroms mit Bezug auf das Messverhalten des Sensors. Grundsätzlich kann die Wahl des Materials der Umhüllung, wie insbesondere die Wahl des verwendeten Kunststoffs, angepasst werden an die Herstellbarkeit der Baueinheit wie auch an die gewünschte Stabilität und die Eigenschaften der Umhüllung, wie dies dem Fachmann grundsätzlich bekannt ist.

In einer weiteren vorteilhaften Ausgestaltung können die Leitungsstränge, beziehungsweise kann der entsprechende Bereich der Leitungsstruktur, an dem die Umhüllung vorgesehen ist, von der Umhüllung umspritzt sein. Insbesondere in dieser Ausgestaltung kann es auf besonders einfache Weise ermöglicht werden, dass die Umhüllung bereits in dem Prozess der Herstellung fest an die Leitungsstruktur fixiert wird und dabei die entsprechenden Leitungsstränge in die Umhüllung eingebettet werden. Insbesondere ist diese Ausgestaltung realisierbar durch das Verwenden eines Spritzgussprozesses, bei dem die Leitungsstränge etwa in eine Spritzgussvorrichtung beziehungsweise Spritzgussform eingelegt werden und von dem entsprechenden Material, insbesondere Kunststoff, umhüllt beziehungsweise umspritzt werden, wie dies für einen Spritzgussprozesses grundsätzlich bekannt ist. Darüber hinaus ist diese Ausgestaltung besonders vorteilhaft, da so eine besonders gute Anpassbarkeit der Unterbaugruppe beziehungsweise der Kontaktierungseinheit bezüglich Geometrie oder Ähnlichem ermöglicht werden kann. Darüber hinaus ist es in dieser Ausgestaltung besonders einfach möglich, Befestigungsmittel zum Befestigen der Kontaktierungseinheit an dem Grundkörper, wie beispielsweise an der Abdeckung, zu realisieren.

Beispielsweise aber nicht beschränkend ist es in dieser Ausgestaltung auf besonders einfache Weise möglich, dass die Kontaktierungseinheit an dem Grundkörper mit einer Rastverbindung fixiert ist. Hierzu können beispielsweise an dem Grundkörper beziehungsweise an der Kontaktierungseinheit entsprechende Mittel vorgesehen sein, um eine Rastverbindung auszubilden. Beispielsweise kann an der Kontaktierungseinheit, wie beispielsweise an der Umhüllung, eine oder eine Mehrzahl an Rastnasen vorgesehen sein, wobei an dem Grundkörper entsprechen Hinterschnitte vorgesehen sind, in welche die Rastnasen einrasten können, oder umgekehrt. Auch diese Ausgestaltung kann besonders vorteilhaft sein für den Fall, dass die Leitungsstruktur beziehungsweise der entsprechende Bereich durch die Umhüllung umspritzt ist. Denn insbesondere durch ein Umspritzen der Leitungsstruktur kann in dem Spritzgussprozess auf besonders einfache Weise eine Rastnase oder auch ein Hinterschnitt formbar sein.

In einer weiteren vorteilhaften Ausgestaltung kann der Grundkörper eine Aufnahme zum Aufnehmen der Kontaktierungseinheit aufweisen. In dieser Ausgestaltung kann die Kontaktierungseinheit besonders einfach und definiert an dem Grundkörper befestigt werden. Darüber hinaus kann in dieser Ausgestaltung eine besonders kompakte und raumarme Ausgestaltung erzeugbar sein, da beispielsweise die Umhüllung von dem Grundkörper beziehungsweise von der Aufnahme aufgenommen werden kann. Dies kann somit insbesondere für derartige Anwendungen von Vorteil sein, wo nur begrenzter Raum für die Sensoraufnahme vorhanden ist. Somit kann diese Ausgestaltung etwa von Vorteil sein für die Anwendung an einem Geberzylinder eines hydraulischen Kupplungssystems eines Fahrzeugs. Dabei kann die Aufnahme etwa bezüglich ihrer Form beziehungsweise ihrer Ausmaße an das Fixierungsmittel, wie etwa an die Umhüllung, angepasst sein.

In einer weiteren vorteilhaften Ausgestaltung kann die Aufnahme zum Aufnehmen des elektrischen Anschlusses eine beziehungsweise bevorzugt eine Mehrzahl an Tannenbaumgeometrien zum Fixieren der Kontaktierungen aufweisen. Diese Ausgestaltung kann beispielsweise dann von Vorteil sein, wenn die Kontaktierungen als Kontaktstifte ausgestaltet sind. Denn in dieser Ausgestaltung können die Kontaktierungen in die jeweilige Tannenbaumgeometrie eingreifen und so dort fixiert werden. Vorteilhaft an dieser Ausgestaltung kann sein, dass so bereits eine Fixierung der Kontaktierungseinheit an dem Grundkörper realisiert wird und so die Anforderungen an weitere Befestigungseinrichtungen, wie etwa die vorbeschriebenen Rastmittel, sowohl bezüglich der Stabilität als auch deren Anzahl, reduziert werden können. Dabei kann die Fixierung durch die Tannenbaumgeometrie auf einfache Weise ausgebildet werden durch ein bloßes Einschieben der Kontaktierungen in die Tannenbaumgeometrie und dadurch automatisch durch ein Anordnen der Kontaktierungseinheit an dem Grundkörper. Darüber hinaus kann so eine gute Dichtheit realisiert werden.

Mit Bezug auf weitere technische Merkmale und Vorteile der vorbeschriebenen Sensoraufnahme wird hiermit explizit auf die nachstehenden Erläuterungen im Zusammenhang mit dem Verfahren, dem hydraulischen System, den Figuren sowie der Figurenbeschreibung verwiesen, und umgekehrt.

Die vorliegende Erfindung betrifft ferner ein Verfahren zum Herstellen einer Sensoraufnahme zum Fixieren und elektrischen Kontaktieren eines Sensors an einem hydraulischen Zylinder, insbesondere an einem Geberzylinder, aufweisend die Verfahrensschritte: a) Bereitstellen eines Grundkörpers, wobei der Grundkörper eine Abdeckung zum Aufnehmen und Fixieren des Sensors und eine Aufnahme zum Aufnehmen eines elektrischen Steckers aufweist; und b) Fixieren einer Kontaktierungseinheit an dem Grundkörper, wobei die Kontaktierungseinheit umfasst eine Leitungsstruktur mit einer Mehrzahl an Leitungssträngen, wobei die Leitungsstränge jeweils endseitig eine Kontaktierung zum elektrischen Kontaktieren des Sensors und eine Kontaktierung zum elektrischen Kontaktieren des elektrischen Anschlusses umfassen, wobei ferner zumindest ein Bereich der Leitungsstruktur zwischen den Kontaktierungen zum elektrischen Kontaktieren des Sensors und den Kontaktierungen zum elektrischen Kontaktieren des elektrischen Anschlusses mit einer an der Leitungsstruktur angeordneten Fixierung versehen ist, wobei die Fixierung die Leitungsstränge miteinander fixiert.

Insbesondere durch die vorbeschriebene Ausgestaltung kann die Herstellung der Sensoraufnahme deutlich vereinfacht werden, da nunmehr nicht mehr, wie dies aus dem Stand der Technik bekannt ist, die einzelnen Leitungsstrukturen jeweils einzeln eingefügt und beispielsweise gebogen werden müssen, um so eine elektrische Kontaktierung zwischen Sensor und einen elektrischen Anschluss herzustellen. Es kann vielmehr auf einfache Weise die als Unterbaugruppe ausgestaltete Leitungsstruktur eingefügt werden was mit einem einzigen Arbeitsschritt möglich ist.

Dabei kann es ferner vorgesehen sein, dass die Fixierung unter Verwendung eines Spritzgussprozesses hergestellt wird, so dass die Leitungsstruktur insbesondere von einer Umhüllung umspritzt wird beziehungsweise die Leitungsstränge von der Umhüllung umspritzt werden. Dadurch kann eine besonders dichte Einbettung der Leitungsstruktur in die Umhüllung realisiert werden und ferner eine besonders gute Anpassbarkeit der Kontaktierungseinheit ermöglicht werden.

Mit Bezug auf weitere technische Merkmale und Vorteile des vorbeschriebenen Verfahrens wird hiermit explizit auf die vorstehenden Erläuterungen im Zusammenhang mit der Sensoraufnahme sowie auf die nachstehenden Erläuterungen im Zusammenhang mit dem hydraulischen System, den Figuren sowie der Figurenbeschreibung verwiesen, und umgekehrt.

Die vorliegende Erfindung betrifft ferner ein hydraulisches System, aufweisend einen hydraulischen Zylinder, wobei an dem Zylinder ein Sensor und eine wie vorstehend im Detail beschriebene Sensoraufnahme fixiert sind. Dabei kann die die Sensoraufnahme beispielsweise an einem Zylindergehäuse fixiert sein und den Sensor so fixieren und elektrisch kontaktieren, wobei die Sensoraufnahme etwa mit dem Zylindergehäuse verschweißt sein. Das hydraulische System kann dabei etwa ein hydraulisches Kupplungssystem eines Kraftfahrzeugs sein. Beispielsweise kann das hydraulische System ein Doppelkupplungsgetriebe aufweisen und/oder einen Geberzylinder, einen Nehmerzylinder sowie eine diese verbindende Hydraulikleitung umfassen.

Das hydraulische System, insbesondere aufweisend eine Doppelkupplung, erlaubt zusammenfassend auf einfache und kompakte Weise eine vereinfachte und sehr anpassbare Herstellbarkeit der Sensoraufnahme.

Mit Bezug auf weitere technische Merkmale und Vorteile des vorbeschriebenen hydraulischen Systems wird hiermit explizit auf die vorstehenden Erläuterungen im Zusammenhang mit der Sensoraufnahme, dem Verfahren sowie auf die nachstehenden Erläuterungen im Zusammenhang mit den Figuren sowie der Figurenbeschreibung verwiesen, und umgekehrt.

Im Folgenden wird ein besonders bevorzugtes Ausführungsbeispiel der Erfindung anhand der beiliegenden Zeichnungen erläutert, wobei explizit darauf hingewiesen wird, dass der erfindungsgemäße Gegenstand nicht auf das beschriebene Ausführungsbeispiel beschränkt ist. Dabei werden gleiche oder vergleichbare Bauteile mit den gleichen Bezugszeichen versehen. Es zeigen:
- Fig. 1: eine schematische Darstellung einer Ausgestaltung einer Sensoraufnahme gemäß der Erfindung;
- Fig. 2: eine schematische Darstellung eines Grundkörpers und einer Kontaktierungseinheit für die Ausgestaltung aus Fig. 1;
- Fig. 3: eine seitliche schematische Schnittansicht von der Ausgestaltung aus Fig. 1;
- Fig. 4: eine zu Fig. 3 um 90° verdrehte schematische Schnittansicht der Ausgestaltung aus Fig. 1;
- Fig. 5: einen vergrößerten Bereich von Fig. 4; und
- Fig. 6: eine schematische Darstellung einer weiteren Ausgestaltung einer Sensoraufnahme gemäß der Erfindung.

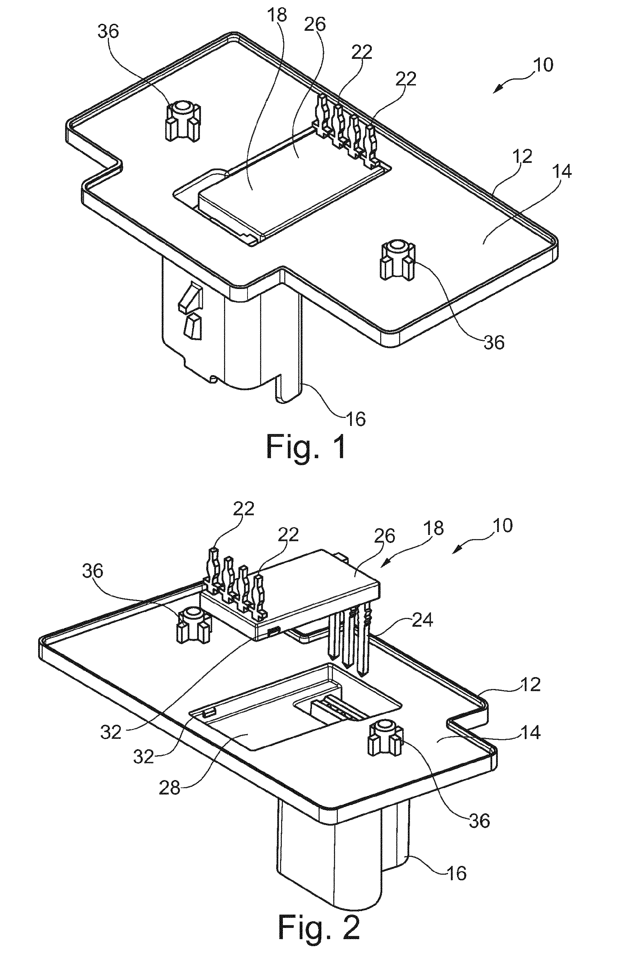

In Figur 1 ist eine schematische Darstellung einer Ausgestaltung einer Sensoraufnahme 10 gemäß der Erfindung gezeigt. Die Sensoraufnahme 10 dient insbesondere dem Fixieren und elektrischen Kontaktieren eines Sensors 30 an einem Hydraulikzylinder, insbesondere an einem Geberzylinder, wie dies in der Figur 7 angedeutet ist. Darüber hinaus kann die Sensoraufnahme 10 Bestandteil eines hydraulischen Systems, insbesondere eines hydraulischen Kupplungssystems, sein.

Die Sensoraufnahme 10 umfasst einen Grundkörper 12 mit einer Abdeckung 14 zum Fixieren des Sensors 30 und mit einer Aufnahme 16 zum Aufnehmen eines elektrischen Anschlusses. Weiterhin umfasst die Sensoraufnahme 10 eine an dem Grundkörper 12 fixierte Kontaktierungseinheit 18, die eine Leitungsstruktur mit einer Mehrzahl an Leitungssträngen 20, wie beispielsweise drei oder vier Leitungssträngen 20, umfasst, wobei die Leitungsstränge 20 jeweils endseitig eine Kontaktierung 22 zum elektrischen Kontaktieren des Sensors 30 und eine Kontaktierung 24 zum elektrischen Kontaktieren des elektrischen Anschlusses umfassen.

Dabei ist zumindest ein Bereich der Leitungsstruktur zwischen den Kontaktierungen 22 zum elektrischen Kontaktieren des Sensors 30 und den Kontaktierungen 24 zum elektrischen Kontaktieren des elektrischen Anschlusses mit einer an der Leitungsstruktur angeordneten Fixierung 26 versehen, wobei die Fixierung 26 die Leitungsstränge 20 miteinander fixiert. Die Fixierung 26 ist dabei als eine insbesondere aus einem Kunststoff ausgebildete Umhüllung ausgestaltet, in die die Mehrzahl an Leitungssträngen 20 eingebettet ist. Insbesondere ist in der Figur 1 zu erkennen, dass die Leitungsstränge 20 von der Umhüllung umspritzt sind, was insbesondere unter Verwendung eines Spritzgussprozesses realisierbar ist.

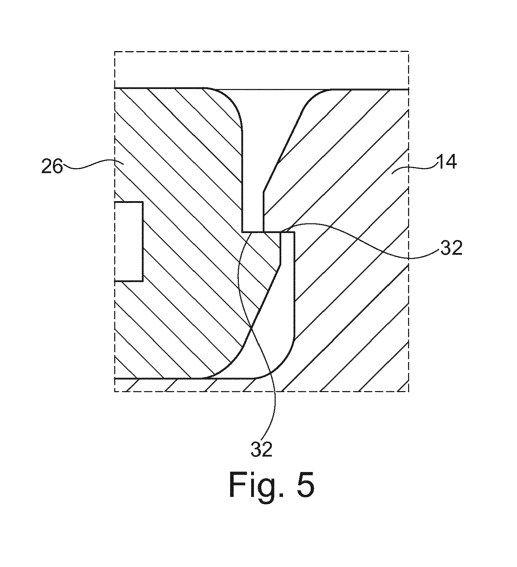

Um etwa eine besonders platzsparende und auch durch eine Blindmontage problemlos ausbildbare Sensoraufnahme 10 zu schaffen, weist der Grundkörper 12 ferner eine Aufnahme 28 zum Aufnehmen der Kontaktierungseinheit 18 auf, wie dies insbesondere in der Figur 2 gezeigt ist. Die Aufnahme 28 kann dabei beispielsweise als Aussparung ausgestaltet sein. In der Figur 2 ist ferner zu erkennen, dass die Kontaktierungseinheit 18 an dem Grundkörper 12 mit einer Rastverbindung fixierbar ist. Dazu sind an der Fixierung 26 sowie an dem Grundkörper 12, insbesondere in der Aufnahme 28, jeweils Rastnasen 32 vorgesehen, sich hintergreifen können. Dies ist in einer vergrößerten Ansicht in der Figur 5 gezeigt. Ferner sind Fixierungsmittel 36 gezeigt, mittels welcher der Sensor 30 in einem montierten Zustand der Sensoraufnahme 10 fixiert werden kann.

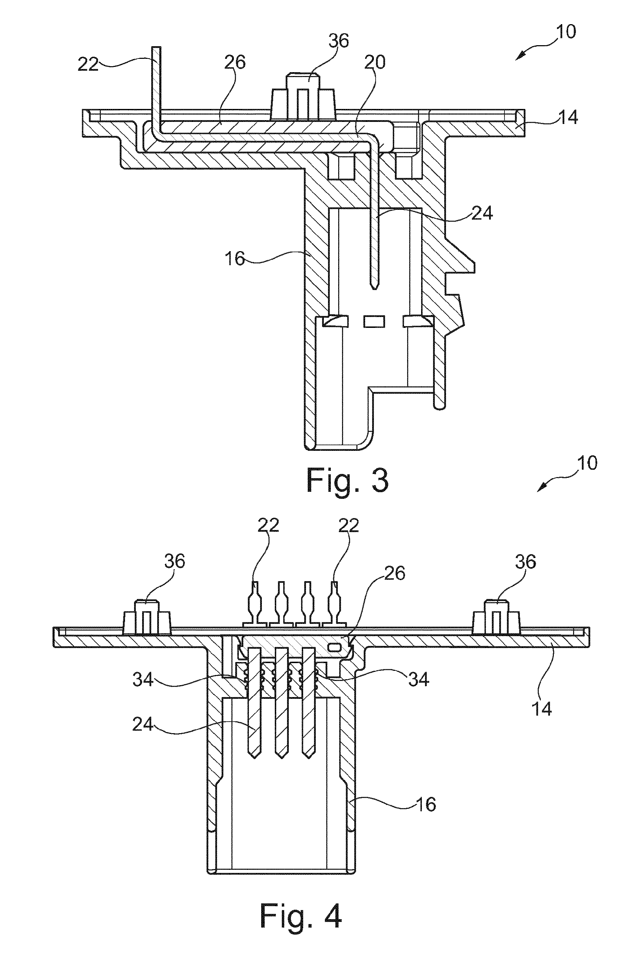

Figur 3 zeigt ferner in einer Schnittansicht, dass die Kontaktierungseinheit 18, zumindest die Fixierung 26 der Kontaktierungseinheit 18, in der Aufnahme 28 angeordnet sein kann.

Dabei kann es ferner vorgesehen sein, wie dies im Detail in der Figur 4 gezeigt ist, dass in der Aufnahme 16 zum Aufnehmen des elektrischen Anschlusses eine beziehungsweise eine Mehrzahl an Tannenbaumgeometrien 34 zum Fixieren der Kontaktierungen 22 vorgesehen ist beziehungsweise sind.

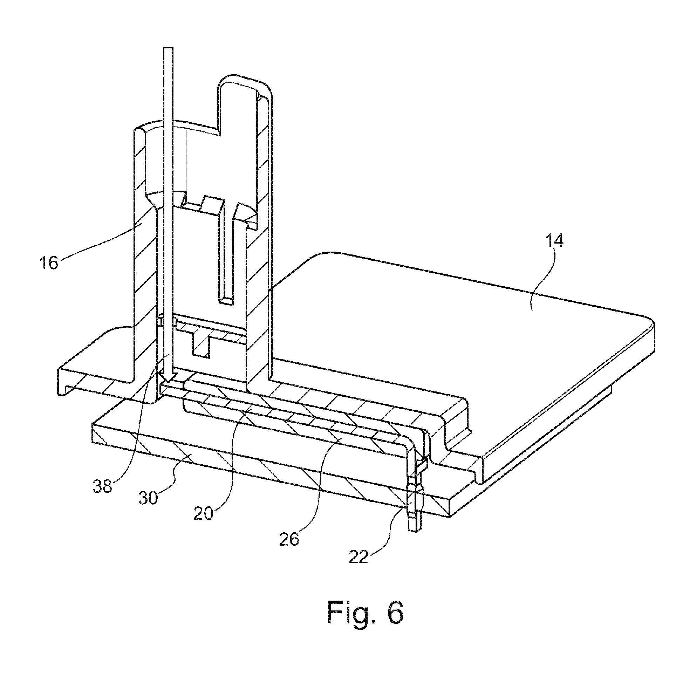

In der Figur 6 ist eine weitere Ausgestaltung einer Sensoraufnahme 10 gezeigt. In dieser Ausgestaltung kann eine besonders einfache Kalibrierung des Sensors 30 ermöglicht werden. Im Detail kann einer der Leitungsstränge 20 lediglich eine Kontaktierung 22 zum Kontaktieren des Sensors 30 aufweisen, wobei jedoch auf eine Kontaktierung 24 zum Kontaktieren des elektrischen Anschlusses in diesem Leitungsstrang 20 verzichtet werden kann. Somit kann mit einer entsprechenden externen Kontaktierung dieser Leitungsstrang 20 elektrisch kontaktiert werden, wie dies durch den Pfeil 38 symbolisiert werden soll. So kann eine Kalibrierung auf besonders einfache Weise realisierbar sein.

Die vorbeschriebene Sensoraufnahme 10 kann dabei besonders einfach und kostengünstig herstellbar sein, indem die zuvor ausgebildete Kontaktierungseinheit 18 beispielsweise in die Aufnahme 28 gesteckt werden kann, wobei automatische eine Fixierung der Kontaktierungseinheit 18 an dem Grundkörper 12 realisiert wird. Dies geschieht insbesondere durch die vorbeschriebenen Rastmittel und die entsprechenden Tannenbaumgeometrien 34.

### Bezugszeichenliste

- 10: Sensoraufnahme
- 12: Grundkörper
- 14: Abdeckung
- 16: Aufnahme
- 18: Kontaktierungseinheit
- 20: Leitungsstrang
- 22: Kontaktierung
- 24: Kontaktierung
- 26: Fixierung
- 28: Aufnahme
- 30: Sensor
- 32: Rastnase
- 34: Tannenbaumgeometrie
- 36: Fixierungsmittel
- 38: Pfeil

## Patentansprüche

1. Sensoraufnahme zum Fixieren und elektrischen Kontaktieren eines Sensors (30) an einem Hydraulikzylinder, insbesondere an einem Geberzylinder, wobei die Sensoraufnahme (10) einen Grundkörper (12) mit einer Abdeckung (14) zum Fixieren des Sensors (30) und eine Aufnahme (16) zum Aufnehmen eines elektrischen Anschlusses umfasst, **dadurch gekennzeichnet, dass** die Sensoraufnahme (10) weiterhin eine an dem Grundkörper (12) fixierte Kontaktierungseinheit (18) aufweist, die eine Leitungsstruktur mit einer Mehrzahl an Leitungssträngen (20) umfasst, wobei die Leitungsstränge (20) jeweils endseitig eine Kontaktierung (22) zum elektrischen Kontaktieren des Sensors (30) und eine Kontaktierung (24) zum elektrischen Kontaktieren des elektrischen Anschlusses umfassen, wobei ferner zumindest ein Bereich der Leitungsstruktur zwischen den Kontaktierungen (22) zum elektrischen Kontaktieren des Sensors (30) und den Kontaktierungen (24) zum elektrischen Kontaktieren des elektrischen Anschlusses mit einer an der Leitungsstruktur angeordneten Fixierung (26) versehen ist, wobei die Fixierung (26) die Leitungsstränge (20) miteinander fixiert.

2. Sensoraufnahme nach Anspruch 1, **dadurch gekennzeichnet, dass** die Fixierung (26) als eine insbesondere aus einem Kunststoff ausgebildete Umhüllung ausgestaltet ist, in die die Mehrzahl an Leitungssträngen (20) eingebettet ist.

3. Sensoraufnahme nach Anspruch 1 oder 2, **dadurch gekennzeichnet, dass** die Leitungsstränge (20) von der Umhüllung umspritzt sind.

4. Sensoraufnahme nach einem der Ansprüche 1 bis 3, **dadurch gekennzeichnet, dass** die Kontaktierungseinheit (18) an dem Grundkörper (12) mit einer Rastverbindung fixiert ist.

5. Sensoraufnahme nach einem der Ansprüche 1 bis 4, **dadurch gekennzeichnet, dass** der Grundkörper (12) eine Aufnahme (28) zum Aufnehmen der Kontaktierungseinheit (18) aufweist.

6. Sensoraufnahme nach einem der Ansprüche 1 bis 5, **dadurch gekennzeichnet, dass** die Aufnahme (16) zum Aufnehmen des elektrischen Anschlusses eine Tannenbaumgeometrie (34) zum Fixieren der Kontaktierungen (22) aufweist.

7. Verfahren zum Herstellen einer Sensoraufnahme (10) zum Fixieren und elektrischen Kontaktieren eines Sensors (30) an einem hydraulischen Zylinder, insbesondere an einem Geberzylinder, aufweisend die Verfahrensschritte
a) Bereitstellen eines Grundkörpers (12), wobei der Grundkörper (12) eine Abdeckung (14) zum Aufnehmen und Fixieren des Sensors (30) und eine Aufnahme (16) zum Aufnehmen eines elektrischen Steckers aufweist; und
b) Fixieren einer Kontaktierungseinheit (18) an dem Grundkörper (12), wobei die Kontaktierungseinheit (18) umfasst eine Leitungsstruktur mit einer Mehrzahl an Leitungssträngen (20), wobei die Leitungsstränge (20) jeweils endseitig eine Kontaktierung (22) zum elektrischen Kontaktieren des Sensors (30) und eine Kontaktierung (24) zum elektrischen Kontaktieren des elektrischen Anschlusses umfassen, wobei ferner zumindest ein Bereich der Leitungsstruktur zwischen den Kontaktierungen (22) zum elektrischen Kontaktieren des Sensors (30) und den Kontaktierungen (24) zum elektrischen Kontaktieren des elektrischen Anschlusses mit einer an der Leitungsstruktur angeordneten Fixierung (26) versehen ist, wobei die Fixierung (26) die Leitungsstränge (20) miteinander fixiert.

8. Verfahren nach Anspruch 7, **dadurch gekennzeichnet, dass** die Fixierung (26) durch einen Spritzgussprozess ausgebildet wird.

9. Hydraulisches System, aufweisend einen hydraulischen Zylinder, **dadurch gekennzeichnet, dass** an dem Zylinder ein Sensor (30) und ferner eine Sensoraufnahme (10) nach einem der Ansprüche 1 bis 6 fixiert ist.

10. Hydraulisches System nach Anspruch 9, **dadurch gekennzeichnet, dass** die Sensoraufnahme (10) an einem Zylindergehäuse fixiert ist.
